## Europäisches Patentamt
## European Patent Office
## Office européen des brevets

(11) Veröffentlichungsnummer: **0 214 138**
**B1**

(12) **EUROPÄISCHE PATENTSCHRIFT**

(19)

(45) Veröffentlichungstag der Patentschrift:
**23.11.88**

(21) Anmeldenummer: **85902476.2**

(22) Anmeldetag: **31.05.85**

(86) Internationale Anmeldenummer:
**PCT/DE 85/00186**

(87) Internationale Veröffentlichungsnummer:
**WO 85/05604 (19.12.85 Gazette 85/27)**

(51) Int. Cl.⁴: **B 62 D 25/06,** B 62 D 29/04

(54) **DACH FÜR KRAFTFAHRZEUGE.**

(30) Priorität: **04.06.84 DE 3420781**

(43) Veröffentlichungstag der Anmeldung:
**18.03.87 Patentblatt 87/12**

(45) Bekanntmachung des Hinweises auf die Patenterteilung:
**23.11.88 Patentblatt 88/47**

(84) Benannte Vertragsstaaten:
**AT BE CH DE FR GB IT LI LU NL SE**

(56) Entgegenhaltungen:
**DE-C-976 585
FR-A-857 225
FR-A-1 113 551
FR-A-1 541 652**

(73) Patentinhaber: **Stübbe GmbH, Ismaninger Str. 67a,
D-8000 München 80 (DE)**

(72) Erfinder: **Der Erfinder hat auf seine Nennung
verzichtet**

(74) Vertreter: **Schirmer, Siegfried, Osningstrasse 10,
D-4800 Bielefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 214 138 B1

LIBER, STOCKHOLM 1988

## Beschreibung

Die Erfindung betrifft ein Dach aus Kunststoff für Kraftfahrzeuge, mit einem zur Aufnahme der Dachaußenschale und der Dachinnenverkleidung ausgebildeten Tragskelett, das eine zur Aussteifung dienende innere Verstärkung aufweist und das auftretende Kräfte in den Rahmen der Karosserie überträgt.

Die bekannten Ausführungen der Dächer von Kraftfahrzeugen aus Stahlblech bieten trotz eines mittigen querverlaufenden Überrollbügels keine befriedigende Sicherheit bei Unfällen. Außerdem ist ihr Gewicht relativ hoch.

Durch die FR-A-1 113 551 ist ein Dach für Kraftfahrzeuge bekannt geworden, das mit einem zur Aufnahme der Dachaußenschale und der Dachinnenverkleidung ausgebildeten Tragskelett versehen ist, wobei alle diese Teile aus Kunststoff hergestellt sind. Das Tragskelett ist über die gesamte Dachfläche gleichmäßig verteilt und soll zur Übertragung der auftretenden Kräfte in den Rahmen der Karosserie dienen.

Der konstruktive Aufbau des aus der FR-A bekannten Dachs für Kraftfahrzeuge ähnelt dem Aufbau einer Sandwichplatte in Form einer Wabenbauplatte. Ein im Dach integrierter mittiger querverlaufender Überrollbügel ist nicht vorhanden. Die Herstellung dieses Daches ist äußerst aufwendig und erfordert mehrere Arbeitsschritte. Eine vollautomatische Serienfertigung ist nicht möglich.

Der Erfindung liegt die Aufgabe zugrunde, ein Dach aus Kunststoff der aufgezeigten Gattung so auszubilden, daß es allen gestellten Anforderungen voll entspricht und dabei noch große Sicherheitsreserven aufweist, wobei die Formgebung eine äußerst ökonomische Herstellung ermöglicht.

Diese Aufgabe wird erfindungsgemäß durch einen umlaufenden Profilrahmen mit eingespritzter Verstärkung in Form einer Gitterkonstruktion aus quer zum Fahrzeug verlaufenden Lastprofilen und diese aussteifenden Rippen gelöst, wobei die Profilrahmen und die Verstärkung in einer zusammenhängenden Einheit im Spritzgießverfahren hergestellt sind. Zweckmäßigerweise weist der Profilrahmen im Querschnitt Doppel-T-Form oder U-Form auf.

Zur Versteifung des Profilrahmens besteht die Möglichkeit, beidseitig am Steg des Doppel-T-förmigen Profilrahmens und einseitig am Steg des U-förmigen Profilrahmens parallel zu den Flanschen verlaufende Versteifungsrippen einzuspritzen. Zweckmäßigerweise bestehen die Lastprofile aus einem Hauptlastprofil und mehreren Nebenlastprofilen, wobei das Hauptlastprofil annähernd in einer Ebene mit den Türholmen verlaufen kann.

Weitere Merkmale der Erfindung sind in den Unteransprüchen aufgezeigt.

Durch die Erfindung ist ein Vollkunststoffdach für Kraftfahrzeuge geschaffen, bei dem alle für die Stabilität und Sicherheit erforderlichen Teile im Spritzgießverfahren herstellbar sind. Das erfindungsgemäße Dach überschreitet die vorgegebenen Sicherheitsanforderungen. Erstmals ist es damit im Karosseriebau für die Automobilindustrie durch den Einsatz eines im Sptitzgießverfahren hergestellten Kunststoffdaches möglich, den Fahrraum vom Dach her als Teilsicherheitszelle zu gestalten. Das im Spritzgießverfahren hergestellte erfindungsgemäße Dach aus Kunststoff hält gegenüber herkömmlichen Konstruktionen das Mehrfache einer statischen Biegelast stand. Das Kunststoffdach nach der Erfindung gewährleistet eine verwindungssteife Dachkonstruktion des Fahrraumes. Besonders bei gefährlichen Überrollunfällen ist ein beachtlicher Sicherheitsgewinn gegenüber den bekannten Dachkonstruktionen gegeben.

Ausführungsbeispiele der Erfindung sind in der Zeichnung dargestellt und werden im folgenden näher beschrieben. Es zeigen:

Fig. 1 eine schaubildliche Darstellung eines Dachprofilrahmens mit eingespritzter Verstärkung mit mehreren Varianten des Verlaufs der Rippen;
Fig. 2 einen Teilschnitt durch das Dach im Türbereich;
Fig. 3 einen Teilschnitt durch das Dach im Bereich der Front- oder Heckscheibe;
Fig. 4 eine Variante zur Fig. 2 und
Fig. 5 einen Teilquerschnitt durch das Dach ohne Innenverkleidung.

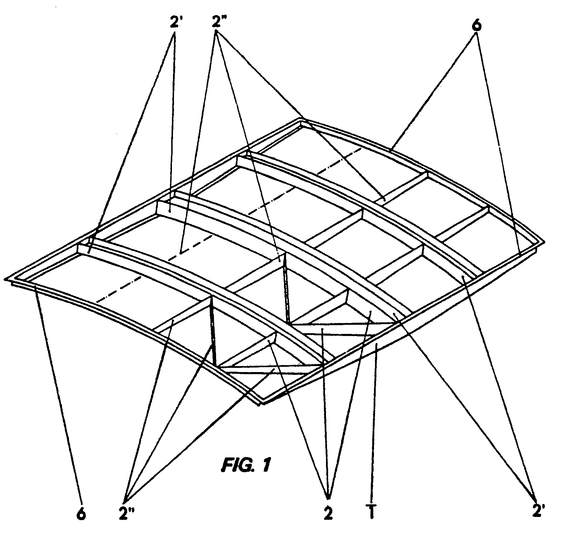

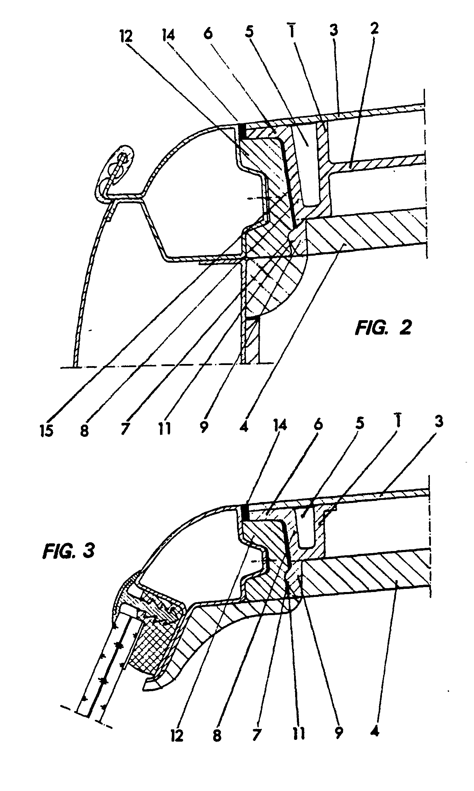

Das Tragskelett 1 + 2 ist als über die Dachfläche verlaufende Versteifung ausgebildet und besteht, wie Fig. 1 zeigt, aus einem umlaufenden Profilrahmen 1 mit eingespritzter Verstärkung 2, die aus quer zum Fahrzeug verlaufenden Lastprofilen 2' und diese aussteifenden Rippen 2" in Form eines Gitterwerkes besteht. In den Ausführungsbeispielen ist ein Profilrahmen 1 mit U-förmigen Querschnitt dargestellt. Der Profilrahmen 1 weist einen sich zur Front- und Heckscheibe hin verändernden Querschnitt auf, wie in den Fig. 2 und 3 dargestellt ist. Am Steg des U-förmigen Profilrahmens 1 sind parallel zu, den Flanschen verlaufende Versteifungsrippen 5 eingespritzt.

Das Tragskelett 1 + 2, das als Flächenversteifung für das gesamte Dach wirkt, die Dachaußenschale 3 und die Dachinnenverkleidung 4 sind aus zusammenfügbaren und überwiegend im Spritzgießverfahren hergestellten Kunststoff-Fertigteilen gebildet.

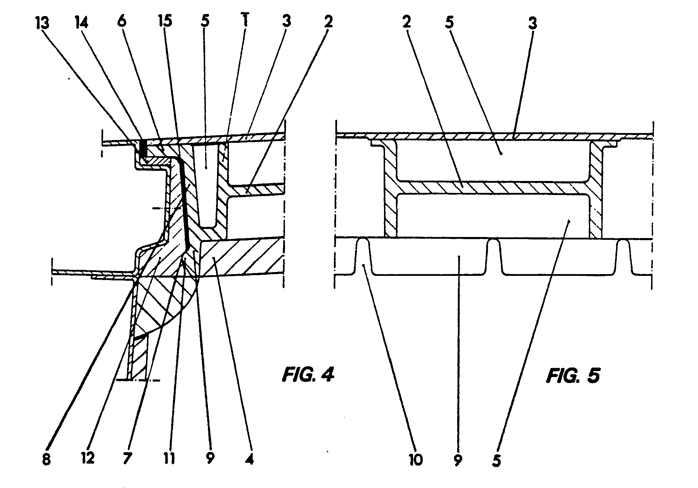

Der außenliegende Flansch 8 des Profilrahmens 1 weist an seiner oberen Begrenzung eine waagerecht verlaufende Abwinklung 6 auf, die rahmenartig um den Profilrahmen 1 verläuft. Außerdem ist der außenliegende Flansch 8 des Profilrahmens 1 nach unten verlängert, wobei diese Verlängerung einen vertikalen Rahmen 9 bildet. Dieser vertikale Rahmen 9 ist mit Ausnehmungen 10 in Form eines Zahnbandes versehen, vgl. Fig. 4.

Ein Kuntstoffkupplungsprofil 12 ist entsprechend dem außenliegenden Flansch 8 des Profilrahmens 1 ausgebildet. Das einen U-förmigen Querschnitt aufweisende Kupplungsprofil 12 ist an den Metallrahmen der Karosserie anschließbar. Auf der zum Profilrahmen 1 weisenden Seite des Kupplungsprofils 12 ist im unteren Bereich ein Verbindungsprofil 7 angeordnet, dem ein entsprechendes Verbindungsprofil 11 des vertikalen Rahmens 9 dem Profilrahmens 1 zugeordnet ist. Die zum Profilrahmen 1 weisende Seite des Kupplungsprofils 12 und die zum Kupplungsprofil 12 weisende Seite des Profilrahmens 1 verlaufen konisch. Beim Montagevorgang rastet das Verbindungsprofil 11 des vertikalen Rahmens 9 elastisch in das Verbindungsprofil 7 des Kupplungsprofils 12, wobei die beiden Verbindungsprofile 7 und 11 so dimensioniert sind, daß zwischen dem Profilrahmen 1 und dem Kupplungsprofil 12 nach der Montage eine Abstandsfuge 15 zur nachträglichen Aufnahme eines Verbindungsmittels gebildet ist. Über die Ausnehmungen 9 wird danach mit einer Spritzpistole das entsprechende Klebemittel in die Abstandsfuge 15 eingebracht.

Als Lagerfläche zur Hilfe bei der Montage und zur Aufnahme des Daches ist ein umlaufendes Lagerband 13 aus Hartgummi angeordnet. Mit 14 ist eine Versiegelungsmasse bezeichnet, die an den umlaufenden Stirnseiten der Dachaußenschale 3 und des waagerecht verlaufenden Rahmens 6 des Profilrahmens 1 eingebracht ist.

Im vorliegenden Fall stellt das Dach eine typische Bauteile-Gruppe dar, die aus hochwertigen Chemiewerkstoffen gefertigt ist. Durch die Kombination verschiedener Chemiewerkstoffe mit jeweils speziellem Eigenschaftscharakter wird ein Karosseriedach in Leichtbauweise geschaffen, die höchsten Sicherheitsanforderungen gerecht wird.

Für das Lastteil, das Tragskelett bietet sich z. B. ein modifizierter thermoplastischer Werkstoff in Form eines modifizierten Polyamid 6 - Types in ungefüllter oder gefüllter Ausführung an. Für das Profillastteil ist dabei u. a. besonders hohe Festigkeit bei entsprechender Steifigkeit erforderlich.

Für die Dachaußenschale ist u. a. ein mineralgefüllter duroplastischer Werkstoff bzw. ein verstärkter halbharter PUR-Werkstoff oder ein modifizierter thermoplastischer Werkstoff in Form eines hochschlagzähen modifizierten Polybutylen-Teraphtalat (PBTP) geeignet. Im Vordergrund steht hier u. a. Steifigkeit und gute optische Oberflächengüte.

Für die Dachinnenverkleidung eignet sich z. B. ein Hartschaum auf der Basis der Polyurethan-Chemie. Dieses Bauteil hat als Verkleidung auch Aufgaben der inneren Sicherheit zu erfüllen.

Die Entwicklung bei hochwertigen Chemiewerkstoffen ist noch nicht abgeschlossen. In der Kunststofforschung wird besonders an maßgeschneiderten Polymerwerkstoffen gearbeitet, die sich durch hohe mechanische und thermische Belastbarkeit, spezielle optische Eigenschaften, selbstverstärkenden Charakter (Liquid Crystals), ausgezeichneter Chemiekalienbeständigkeit usw. auszeichnen.

Polymer-Blends mit einem attraktiven Preis/Leistungs-verhältnis werden schon mittelfristig im Karosseriebau der Automobilindustrie einen neuen Markt erschließen.

Die Fertigung von Karosserieteilen aus Chemiewerkstoffen in Leichtbauweise und Großserie steht dabei unter der Maßgabe, daß ein bedeutender technischer Fortschritt, Kostenoptimierung bei besserer Qualität. Fertigungsverbesserungen zur Arbeitserleichterung und zur Reduzierung der Fertigungskosten erreicht wird.

Stübbe hat in neuer Technologie für den Karosseriebau mit Chemiewerkstoffen für die Automobilindustrie eine Karosseriemaschinen-Baureihe für die Großserienfertigung entwickelt, die diese Aufgabe erfüllt.

**Patentansprüche**

1. Dach aus Kunststoff für Kraftfahrzeuge, mit einem zur Aufnahme der Dachaußenschale und der Dachinnenverkleidung ausgebildeten Tragskelett, das eine zur Aussteifung dienende innere Verstärkung aufweist und das auftretende Kräfte in den Rahmen der Karosserie überträgt, gekennzeichnet durch einen umlaufenden Profilrahmen (1) mit eingespritzter Verstärkung (2) in Form einer Gitterkonstruktion aus quer zum Fahrzeug Verlaufenden Lastprofilen (2') und diese aussteifenden Rippen (2''), wobei der Profilrahmen (1) und die Verstärkung (2) in einer zusammenhängenden Einheit im Spritzgießverfahren hergestellt sind.

2. Dach für Kraftfahrzeuge nach Anspruch 1, dadurch gekennzeichnet, daß der Profilrahmen (1) im Querschnitt Doppel-T-Form oder U-Form aufweist.

3. Dach für Kraftfahrzeuge nach Anspruch 1 oder 2, dadurch gekennzeichnet, daß der Profilrahmen (1) einen sich zur Windschutzscheibe hin verändernden Profilquerschnitt aufweist.

4. Dach für Kraftfahrzeuge nach einem der Ansprüche 1 bis 3, dadurch gekennzeichnet, daß beidseitig am Steg des Doppel-T-förmigen Profilrahmens (1) parallel zu den Flanschen verlaufende Versteifungsrippen (5) eingespritzt sind.

5. Dach für Kraftfahrzeuge nach einem der Ansprüche 1 bis 3, dadurch gekennzeichnet, daß am Steg des U-förmigen Profilrahmens (1) parallel zu den Flanschen verlaufende Versteifungsrippen (5) eingespritzt sind.

6. Dach für Kraftfahrzeuge nach Anspruch 4 oder 5, dadurch gekennzeichnet, daß die Versteifungsrippen (5) im gleichen Abstand voneinander angeordnet sind.

7. Dach für Kraftfahrzeuge nach einem der Ansprüche 1 bis 6, dadurch gekennzeichnet, daß die Rippen (2") längs zum Fahrzeug verlaufen.

8. Dach für Kraftfahrzeuge nach Anspruch 7, dadurch gekennzeichnet, daß die Rippen (2") diagonal oder kreuzförmig verlaufen.

9. Dach für Kraftfahrzeuge nach einem der Ansprüche 1 bis 8, dadurch gekennzeichnet, daß die Lastprofile (2') V-Form, Doppel-T-Form oder U-Form aufweisen.

10. Dach für Kraftfahrzeuge nach einem der Ansprüche 1 bis 9, dadurch gekennzeichnet, daß die Lastprofile (2') und die Rippen (2") an ihren Verbindungs- und Anschlußstellen verstärkte Anbindungen aufweisen.

11. Dach für Kraftfahrzeuge nach Anspruch 10, dadurch gekennzeichnet, daß die Anbindungen abgerundet verlaufen.

12. Dach für Kraftfahrzeuge nach einem der Ansprüche 1 bis 11, dadurch gekennzeichnet, daß die Lastprofile (2') und die Rippen (2") bis an die Innenflächen der Dachaußenschale (3) geführt sind.

13. Dach für Kraftfahrzeuge nach einem der Ansprüche 1 bis 12, dadurch gekennzeichnet, daß die Lastprofile (2') und die Rippen (2") bündig mit dem umlaufenden Profilrahmen (1) abschließen.

14. Dach für Kraftfahrzeuge nach einem der Ansprüche 1 bis 13, dadurch gekennzeichnet, daß die Lastprofile (2') aus einem Hauptlastprofil und mehreren Nebenlastprofilen bestehen.

15. Dach für Kraftfahrzeuge nach Anspruch 14, dadurch gekennzeichnet, daß das Hauptlastprofil annähernd in einer Ebene mit den Türholmen verläuft.

16. Dach für Kraftfahrzeuge nach einem der Ansprüche 1 bis 15, dadurch gekennzeichnet, daß im vorderen Teil der Verstärkung (2) ein Zusatzrahmen zur Aufnahme eines Schiebedaches eingelassen ist.

17. Dach für Kraftfahrzeuge nach Anspruch 16, dadurch gekennzeichnet, daß im Zusatzrahmen alle Montagepositionen für das Schiebedach angeordnet sind.

18. Dach für Kraftfahrzeuge nach einem der Ansprüche 1 bis 17, dadurch gekennzeichnet, daß der Profilrahmen (1) sowie die Lastprofile (2') und die Rippen (2") an ihren oberen Begrenzungen zur Auflage der Dachaußenschale (3) Verbreitungen aufweisen.

19. Dach für Kraftfahrzeuge nach einem der Ansprüche 1 bis 18, dadurch gekennzeichnet, daß der außenliegende Flansch (8) des Profilrahmens (1) an seiner oberen Begrenzung eine waagerechte Abwinklung (6) aufweist, die rahmenartig um den Profilrahmen (1) geführt ist.

20. Dach für Kraftfahrzeuge nach einem der Ansprüche 1 bis 19, dadurch gekennzeichnet, daß der außenliegende Flansch (8) des Profilrahmens (1) nach unten verlängert ist und diese Verlängerung einen vertikalen Rahmen (9) bildet.

21. Dach für Kraftfahrzeuge nach Anspruch 20, dadurch gekennzeichnet, daß der vertikale Rahmen (9) mit Ausnehmungen (10) in Form eines Zahnbandes versehen ist.

22. Dach für Kraftfahrzeuge nach Anspruch 20 oder 21, dadurch gekennzeichnet, daß der vertikale Rahmen (9) auf der Außenseite mit einem Verbindungsprofil (11) versehen ist.

23. Dach für Kraftfahrzeuge nach einem der Ansprüche 1 bis 22, dadurch gekennzeichnet, daß die Dachaußenschale (3) auf der zum Tragskelett (1 + 2) weisenden Seite ein Flächenprofil aufweist, das am Tragskelett (1 + 2) aufliegt und mit diesen verbunden ist.

24. Dach für Kraftfahrzeuge nach Anspruch 23, dadurch gekennzeichnet, daß das Flächenprofil der Dachaußenschale (3) mit dem Tragskelett (1 + 2) durch geben oder Schweißen verbunden ist.

25. Dach für Kraftfahrzeuge nach Anspruch 23 oder 24, dadurch gekennzeichnet, daß das Flächenprofil der Dachaußenschale (3) im Verbindungsbereich verstärkt ausgebildet ist.

26. Dach für Kraftfahrzeuge nach einem der Ansprüche 24 bis 25, dadurch gekennzeichnet, daß die Flächenversteifung unterschiedliche Wandstärken aufweist.

27. Dach für Kraftfahrzeuge nach einem der Ansprüche 25 bis 27, dadurch gekennzeichnet, daß sich die Flächenversteifung stufenlos von den Randzonen zur Mitte verstärkt.

28. Dach für Kraftfahrzeuge nach einem der Ansprüche 1 bis 27, gekennzeichnet durch ein Kunststoffkupplungsprofil (12), das dem außenliegenden Flansch (8) des Profilrahmens (1) entsprechend ausgebildet und das an den Metallrahmen der Karosserie anschließbar ist.

29. Dach für Kraftfahrzeuge nach Anspruch 28, dadurch gekennzeichnet, daß das Kupplungsprofil (12) einen U- oder T-förmigen Querschnitt aufweist.

30. Dach für Kraftfahrzeuge nach einem der Ansprüche 1 bis 29, dadurch gekennzeichnet, daß im unteren Bereich des Kupplungsprofils (12) auf der zum Profilrahmen (1) weisenden Seite ein Verbindungsprofil (7) angeordnet ist.

31. Dach für Kraftfahrzeuge nach einem der Ansprüche 1 bis 30, dadurch gekennzeichnet, daß das Verbindungsprofil (7) des Kupplungsprofils (12) äquivalent zum Verbindungsprofil (11) des vertikalen Rahmens (9) des Profilrahmens (1) ausgebildet ist.

32. Dach für Kraftfahrzeuge nach einem der Ansprüche 1 bis 31, dadurch gekennzeichnet, daß die zum Profilrahmen (1) weisende Seite des Kupplungsprofils (12) und die zum Kupplungsprofil (12) weisende Seite des Profilrahmens (1) konisch verlaufen.

33. Dach für Kraftfahrzeuge nach einem der Ansprüche 1 bis 32, dadurch gekennzeichnet, daß zwischen dem Profilrahmen (1) und dem Kupplungsprofil (12) im zusammengefügten Zustand eine Abstandsfuge (15) zur nachträglichen Aufnahme eines Verbindungsmittels gebildet ist.

34. Dach für Kraftfahrzeuge nach einem der Ansprüche 1 bis 33, dadurch gekennzeichnet, daß die Dachinnenverkleidung (4) ein Formpolster mit Prallfläche aufweist.

35. Dach für Kraftfahrzeuge nach einem der Ansprüche 1 bis 34, dadurch gekennzeichnet, daß die Dachinnenverkleidung (4) auf der zum Tragskelett (1 + 2) weisenden Seite ein umlaufendes Profil aufweist, das am Profilrahmen (1) und der Verstärkung (2) anliegt und mit diesen verbindbar ist.

36. Dach für Kraftfahrzeuge nach Anspruch 35, dadurch gekennzeichnet, daß das umlaufende Profil der Dachinnenverkleidung (4) im Verbindungsbereich verstärkt ausgebildet ist.

37. Dach für Kraftfahrzeuge nach einem der Ansprüche 1 bis 36, dadurch gekennzeichnet, daß die Dachinnenverkleidung (4) mit einem Textilmaterial oder mit einem Kunststoff kaschiert ist.

38. Dach für Kraftfahrzeuge nach einem der Ansprüche 1 bis 37, dadurch gekennzeichnet, daß als Lagerfläche zur Hilfe bei der Montage und zur Aufnahme des Daches ein umlaufendes Lagerband (13) angeordnet ist.

39. Dach für Kraftfahrzeuge nach Anspruch 38, dadurch gekennzeichnet, daß das Lagerband (13) aus Hartgummi gebildet ist.

40. Dach für Kraftfahrzeuge nach einem der Ansprüche 1 bis 39, dadurch gekennzeichnet, daß an den umlaufenden Stirnseiten der Dachaußenschale (3) und des waagerecht verlaufenden Rahmens (6) des Profilrahmens (1) eine Dachversiegelungsmasse (14) eingebracht ist.

## Claims

1. Synthetic material roof for motor vehicles with a carrier skeleton, which is constructed for the reception of the outer roof skin and the inner roof lining and which displays an inner re-inforcement serving for stiffening and transmits the arising forces into the frame of the chassis, characterised by an encircling profile frame (1) with injected reinforcement (2) in the shape of a grid construction of load profiles (2') extending transversely to the vehicle and of ribs (2") stiffening these, wherein the profile frame (1) and the reinforcement (2) are produced in an injection-moulding process in a contiguous unit.

2. Roof for motor vehicles according to claim 1, characterised thereby, that the profile frame (1) displays double-T-shape or U-shape in cross-section.

3. Roof for motor vehicles according to claim 1 or 2, characterised thereby, that the profile frame (1) displays a profile cross-section varying towards the windscreen.

4. Roof for motor vehicles according to one of the claims 1 to 3, characterised thereby, that stiffening ribs (5), which extend parallelly to the flanges, are injected at both sides of the web of the profile frame (1) of double-T-shape.

5. Roof for motor vehicles according to one of the claims 1 to 3, characterised thereby, that stiffening ribs (5), which extend parallelly to the flanges, are injected at the web of the profile frame (1) of U-shape.

6. Roof for motor vehicles according to claim 4 or 5, characterised thereby, that the stiffening ribs (5) are arranged at equal spacing one from the other.

7. Roof for motor vehicles according to one of the claims 1 to 6, characterised thereby, that the ribs (2") extend longitudinally of the vehicle.

8. Roof for motor vehicles according to claim 7, characterised thereby, that the ribs (2") extend diagonally or cruciformly.

9. Roof for motor vehicles according to one of the claims 1 to 8, characterised thereby, that the load profiles (2') display V-shape, double-T-shape or U-shape.

10. Roof for motor vehicles according to one of the claims 1 to 9, characterised thereby, that the load profiles (2') and the ribs (2") display reinforced lashings at their connection and attachment points.

11. Roof for motor vehicles according to claims 10, characterised thereby, that the lashings are rounded off.

12. Roof for motor vehicles according to one of the claims 1 to 11, characterised thereby, that the load profiles (2') and the ribs (2") are led to the inward surfaces of the outer roof skin (3).

13. Roof for motor vehicles according to one of the claims 1 to 12, characterised thereby, that the load profiles (2') and the ribs (2") end off flush with the encircling profile frame (1).

14. Roof for motor vehicles according to one of the claims 1 to 13, characterised thereby, that the load profiles (2') consist of a main load profile and several secondary load profiles.

15. Roof for motor vehicles according to claim 14, characterised thereby, that the main load profile extends in approximately the same plane as the door posts.

16. Roof for motor vehicles according to one of the claims 1 to 15, characterised thereby, that an additional frame for the reception of a sliding roof is let into the forward part of the reinforcement (2).

17. Roof for motor vehicles according to claim 16, characterised thereby, that all assembly positions for the sliding roof are arranged in the additional frame.

18. Roof for motor vehicles according to one of the claims 1 to 17, characterised thereby, that the profile frame (1) as well as the load profiles (2') and the ribs (2") display enlargements at their upper boundaries for the support of the outer roof skin (3).

19. Roof for motor vehicles according to one of the claims 1 to 18, characterised thereby, that the outward flange (8) of the profile frame (1) at its upper boundary displays a horizontal bend (6), which is led in the manner of a frame around the profile frame (1)

20. Roof for motor vehicles according to one of the claims 1 to 19, characterised thereby, that the outward flange (8) of the profile frame (1) is prolonged downwardly and this prolongation forms a vertical frame (9).

21. Roof for motor vehicles according to claim 20, characterised thereby, that the vertical frame (9) is provided with recesses (10) in the shape of a toothed belt.

22. Roof for motor vehicles according to claim 20 or 21, characterised thereby, that the vertical frame (9) is provided with a connecting profile (11) on the outside.

23. Roof for motor vehicles according to one of the claims 1 to 22, characterised thereby, that the outer roof skin (3) on the side facing the carrier skeleton (1 + 2) displays an areal profile which rests on the carrier skeleton (1 + 2) and is connected with this.

24. Roof for motor vehicles according to claim 23, characterised thereby, that the areal profile of the outer roof skin (3) is connected with the carrier skeleton (1 + 2) by gluing or welding.

25. Roof for motor vehicles according to claim 23 or 24, characterised thereby, that the areal profile of the outer roof skin (3) is constructed to be strengthened in the connecting region.

26. Roof for motor vehicles according to one of the claims 24 to 25, characterised thereby, that the areal re-inforcement displays different wall thicknesses.

27. Roof for motor vehicles according to one of the claims 25 to 27, characterised thereby, that the areal re-inforcement is strengthened steplessly from the edge zones towards the centre.

28. Roof for motor vehicles according to one of the claims 1 to 27, characterised by a synthetic material coupling profile (12), which is constructed in correspondence with the outward flange (8) of the profile frame (1) and attachable to the metal frame of the chassis.

29. Roof for motor vehicles according to claim 28, characterised thereby, that the coupling profile (12) displays a cross-section of U-shape or T-shape.

30. Roof for motor vehicles according to one of the claims 1 to 29, characterised thereby, that a connecting profile (7) is arranged on the side facing the profile frame (1) in the lower region of the coupling profile (12).

31. Roof for motor vehicles according to one of the claims 1 to 30, characterised thereby, that the connecting profile (7) of the coupling profile (12) is constructed equivalently to the connecting profile (11) of the vertical frame (9) of the profile frame (1).

32. Roof for motor vehicles according to one of the claims 1 to 31, characterised thereby, that that side of the coupling profile (12), which faces the profile frame (1), and that side of the profile frame (1), which faces the coupling profile (12), extend conically.

33. Roof for motor vehicles according to one of the claims 1 to 32, characterised thereby, that a spacing gap (15) for the subsequent reception of a connecting means is formed in the assembled state between the profile frame (1) and the coupling profile (12).

34. Roof for motor vehicles according to one of the claims 1 to 33, characterised thereby, that the inner roof lining (4) displays a shaped padding with rebound surface.

35. Roof for motor vehicles according to one of the claims 1 to 34, characterised thereby, that the inner roof lining (3) on the side facing the carrier skeleton (1 + 2) displays an encircling profile which rests against the profile frame (1) and the reinforcement (2) and is connectible with these.

36. Roof for motor vehicles according to claim 35, characterised thereby, that the encircling profile of the inner roof lining (4) is constructed to be strengthened in the connecting region.

37. Roof for motor vehicles according to one of the claims 1 to 36, characterised thereby, that the inner roof lining (4) is laminarly coated by a textile material or by a synthetic material.

38. Roof for motor vehicles according to one of the claims 1 to 37, characterised thereby, that an encircling bearing band (13) is arranged as bearing surface for assistance during the assembly and for reception of the roof.

39. Roof for motor vehicles according to claim 38, characterised thereby, that the bearing band (13) is formed of hard rubber.

40. Roof for motor vehicles according to one of the claims 1 to 39, characterised thereby, that a roof-sealing mass (14) is introduced at the encircling end faces of the outer roof skin (3) and of the horizontally extending frame (6) of the profile frame (1).

**Revendications**

1. Toit en matière plastique pour véhicules automobiles, avec un squelette porteur conçu pour recevoir la coquille extérieure de toit et la garniture intérieure de toit, qui possède un renforcement intérieur servant au raidissement et qui transmet des efforts survenant dans le châssis de la carrosserie, caractérisé par un châssis profilé (1) périphérique, avec un renforcement (2) injecté, en forme d'une construction en grille, à partir de profilés de charge (2') se développant transversalement par rapport au véhicule et de nervures (2") les raidissant, le châssis profilé (1) et le renforcement (2) étant, à cette occasion, fabriqués en une unité continue, dans un procédé de coulée par injection.

2. Toit pour véhicules automobiles, selon la revendication 1, caractérisé en ce que le châssis profilé (1) possède une section en forme de double T ou de U.

3. Toit pour véhicules automobiles, selon la revendication 1 ou 2, caractérisé en ce que le châssis profilé (1) possède une section profilée se modifiant en un pare-brise.

4. Toit pour véhicules automobiles, selon l'une des revendications 1 à 3, caractérisé en ce que les nervures de raidissement (5), se développant parallèlement aux rebords, sont injectées des deux côtés sur la nervure du châssis profilé (1) en forme de double T.

5. Toit pour véhicules automobiles, selon l'une des revendications 1 à 3, caractérisé en ce que des nervures de raidissement (5), se développant parallèlement au rebord, sont injectées sur la nervure du châssis profilé (1) en forme de U.

6. Toit pour véhicules automobiles, selon la revendication 4 ou 5, caractérisé en ce que les nervures de raidissement (5) sont disposées à égale distance les unes des autres.

7. Toit pour véhicules automobiles, selon l'une des revendications 1 à 6, caractérisé en ce que les nervures 2'' se développent le long du véhicule.

8. Toit pour véhicules automobiles, selon la revendication 7, caractérisé en ce que les nervures (2'') se développent en diagonale ou bien en forme de croix.

9. Toit pour véhicules automobiles, selon l'une des revendications 1 à 8, caractérisé en ce que les profilés de charge (2') possèdent une forme en V, une forme en double T ou bien une forme en U.

10. Toit pour véhicules automobiles, selon l'une des revendications 1 à 9, caractérisé en ce que les profilés de charge (2') et les nervures (2'') possèdent des attaches renforcées à leurs points de liaison et de raccordement.

11. Toit pour véhicules automobiles, selon la revendication 10, caractérisé en ce que les attaches se développent de manière arrondie.

12. Toit pour véhicules automobiles, selon l'une des revendications à 11, caractérisé en ce que les profilés de charge (2') et les nervures (2'') sont guidées jusqu'aux surfaces intérieures de coquille extérieure de toit (3).

13. Toit pour véhicules automobiles, selon l'une des revendications 1 à 12, caractérisé en ce que les profilés de charge (2') et les nervures (2'') sont entourées à fleur au châssis profilé (1) périphérique.

14. Toit pour véhicules automobiles, selon l'une des revendications 1 à 13, caractérisé en ce que les profilés de charge (2') se composent d'un profilé de charge principal et de plusieurs profilés de charge auxiliaires.

15. Toit pour véhicules automobiles, selon la revendication 14, caractérisé en ce que le profilé de charge principal se développe approximativement dans un plan comprenant les longerons de porte.

16. Toit pour véhicules automobiles, selon l'une des revendications 1 à 15, caractérisé en ce qu'un châssis supplémentaire destiné à recevoir un toit coulissant est introduit dans la partie avant du renforcement (2).

17. Toit pour véhicules automobiles, selon la revendication 16, caractérisé en ce que toutes les positions de montage pour le toit coulissant sont disposées dans le châssis supplémentaire.

18. Toit pour véhicules automobiles, selon l'une des revendications 1 à 17, caractérisé en ce que le châssis profilé (1), ainsi que les profilés de charge (2') et les nervures (2'') possèdent des élargissements à leurs limites supérieures, pour poser la coquille extérieure de toit (3).

19. Toit pour véhicules automobiles, selon l'une des revendications 1 à 18, caractérisé en ce que le rebord extérieur (8) du châssis profilé (1) possède un développement (6) horizontal à sa limite supérieure, qui est guidé autour du châssis profilé (1), comme un châssis.

20. Toit pour véhicules automobiles, selon l'une des revendications 1 à 19, caractérisé en ce que le rebord extérieur (8) du châssis profilé (1) est prolongé vers le bas et que ce prolongement forme un châssis (9) vertical.

21. Toit pour véhicules automobiles, selon la revendication 20, caractérisé en ce que le châssis (9) vertical est pourvu d'évidements (10), en forme de bande dentée.

22. Toit pour véhicules automobiles, selon la revendication 20 ou 21, caractérisé en ce que le châssis (9) vertical est pourvu d'un profilé de liaison (11), sur le côté extérieur.

23. Toit pour véhicules automobiles, selon l'une des revendications 1 à 22, caractérisé en ce que la coquille extérieure de toit (3) possède un profilé plat, sur le côté, qui est tourné vers le squeletté porteur (1 + 2) et qui est posé sur le squelette porteur (1 + 2) et est relié à celui-ci.

24. Toit pour véhicules automobiles, selon la revendication 23, caractérisé en ce que le profilé plat de la coquille extérieure de toit (3) est reliée au squelette porteur (1 + 2) par collage ou bien soudage.

25. Toit pour véhicules automobiles, selon la revendication 23 ou 24, caractérisé en ce que le profilé plat de la coquille extérieure de toit (3) est conçu de manière renforcée dans la zone de liaison.

26. Toit pour véhicules automobiles, selon l'une des revendications 24 à 25, caractérisé en ce que le raidissement de surface possède differentes épaisseurs de parois.

27. Toit pour véhicules automobiles, selon l'une des revendications 25 à 26, caractérisé en ce que le raidissement de surface se renforce de manière continue, depuis les zones de bordure, vers le milieu.

28. Toit pour véhicules automobiles, selon l'une des revendications 1 à 27, caractérisé par un profilé d'accouplement (12) en matière plastique qui est conçu en fonction de la bride extérieure (8) du châssis profilé (1) et qui est raccordable au châssis métallique de la carrosserie.

29. Toit pour véhicules automobiles, selon la revendication 28, caractérisé en ce que le profilé d'accouplement (12) possède une section en forme du U ou bien de T.

30. Toit pour véhicules automobiles, selon l'une des revendications 1 à 29, caractérisé en ce qu'un profilé de liaison (7) est disposé dans la zone inférieure du profilé d'accouplement (12), du côté qui est tourné vers le châssis profilé (1).

31. Toit pour véhicules automobiles, selon l'une des revendications 1 à 30, caractérisé en ce que le profilé de liaison (7) du profilé d'accouplement (12) est conçu de manière équivalente au profilé de liaison (11) du châssis vertical (9) du châssis profilé (1).

32. Toit pour véhicules automobiles, selon l'une des revendications 1 à 31, caractérisé en ce que le côté du profilé d'accouplement (12), qui est tourné vers le châssis profilé (1) et le côté du châssis profilé (1) qui est tourné vers le profilé d'accouplement (12), se développe de manière conique.

33. Toit pour véhicules automobiles, selon l'une des revendications 1 à 32, caractérisé en ce qu un joint d'écartement (15), destiné à recevoir ultérieurement un produit de liaison, est exécuté entre le châssis profilé (1) et le profilé d'accouplement (12), à l'état assemblé.

34. Toit pour véhicules automobiles, selon l'une des revendications 1 à 33, caractérisé en ce que la garniture intérieure de toit (4) possède une coussin de forme, avec une surface de rebondissement.

35. Toit pour véhicules automobiles, selon l'une des revendications 1 à 34, caractérisé en ce que la garniture intérieure de toit (4) possède un profil périphérique sur le côté qui est tourné vers le squelette porteur (1 + 2), qui appuie sur le châssis profilé (1) et le renforcement (2) et est susceptible d'être relié avec lui.

36. Toit pour véhicules automobiles, selon la revendication 35, caractérisé en ce que le profil périphérique de la garniture intérieure de toit (4) est conçu de manière renforcée dans la zone de liaison.

37. Toit pour véhicules automobiles, selon l'une des revendications 1 à 36, caractérisé en ce que la garniture de toit (4) est doublée avec un matériau textile ou bien avec une matière plastique.

38. Toit pour véhicules automobiles, selon l'une des revendications 1 à 37, caractérisé en ce qu'une bande d'appui (13) périphérique est disposée, comme surface d'appui, pour aider lors du montage et pour recevoir le toit.

39. Toit pour véhicules automobiles, selon la revendication 38, caractérisé en ce que la bande d'appui (13) est formée de caoutchouc dur.

40. Toit pour véhicules automobiles, selon l'une des revendications 1 à 39, caractérisé en ce qu'une charge de scellement de toit (14) est introduite sur les côtés frontaux périphériques de la coquille extérieure de toit (3) et du châssis (6) du châssis profilé (1), se développant horizontalement.

**FIG. 1**

FIG. 2

FIG. 3

13  14  6  15  5  T  3  2    2  5  3

**FIG. 4**    **FIG. 5**

8  12  7  11  9  4    10  9  5